# EUROPEAN PATENT APPLICATION

(11) **EP 2 099 204 A1**
(43) Date of publication of application: **09.09.2009**
(21) Application number: 07816983.6
(22) Date of filing: 26.09.2007
(51) Int. Cl.: H04M 3/42

(54) **MISSED CALL PROMPTING METHOD, MISSED CALL PROMPTING SYSTEM AND MISSED CALL PROMPTING SERVICE PLATFORM**

(30) Priority: 27.12.2006 CN 200610168386; 30.04.2007 CN 200710107165
(71) Applicant: Huawei Technologies Co., Ltd., Shenzhen, Guangdong Province 518129 (CN)
(72) Inventor: QU, Jun, Shenzhen Guangdong 518129 (CN); ZONG, Zaijian, Shenzhen Guangdong 518129 (CN)
(74) Representative: Thun, Clemens
(86) International application number: PCT/CN2007/070792
(87) International publication number: WO 2008/077323

(57) **Abstract**

A method for missing call notification includes the following steps: once a called terminal misses a call, determining whether a missing call notification short message of the called terminal in a called short message service center ,SMSC, may be replaced or not; next, if the missing call notification short message can be replaced, combining the information of the missing call with the content of the missing call notification short message, so as to replace the original missing call notification short message; finally, sending the missing call notification short message to the called terminal by the called SMSC after a triggering condition is satisfied. The present invention further discloses a system for missing call notification and a service platform for missing call notification. The present invention enhances the reliability of the missing call notification short message, and the called terminal is prevented from receiving a lot of missing call notification short messages in a short time period after being powered on, thereby reducing the requirement on storage capacity of the called SMSC.

## Description

### FIELD OF THE INVENTION

The present invention relates to a missing call notification field, and more particularly, to a method, system and service platform for missing call notification.

### BACKGROUND

In recent years, along with the rapid development of communication services, fixed-line phones, wireless local telephone terminals, and mobile terminals become increasingly prevailing. A communication network has become a public service network with the largest number of subscribers, broadest coverage, and greatest influence. Currently, the subscriber capacity in each district rises rapidly, and the traffic volume increases significantly. However, the call-completion rate is always rather low, under the influences of errors in pressing keys by subscribers, other improper use, and out of service. The low call-completion rate not only causes continuously increasing of ineffective calls, but also wastes network resources of operators.

In order to solve the aforementioned problems and enhance the operators' network operation capability, the operators generally deal with calling failures by deployment of supplementary communication services, such as voice mailbox and missing call notification. These services are generally combined with each other, in order to well satisfy the requirements of end users.

The missing call notification service is provided for called subscribers, which enables a called subscriber to set conditions for forwarding calls to a service platform for missing call notification at the called terminal freely, for example, forwarding calls to the service platform for missing call notification in case of being busy, no answers, or unreachable, or forwarding calls to the service platform for missing call notification unconditionally. Furthermore, the called subscriber may also activate the missing call notification service that is set at the network side. The internal system of the operators offers default settings that calls are forwarded to the service platform for missing call notification in case of being busy, no answers, or unreachable, and the subscribers may modify such default setting.

When a calling terminal calls a called terminal that is in the state of being busy, no answers, or unreachable, the communication network forwards the call to the service platform for missing call notification. The service platform for missing call notification notifies the calling terminal that the called terminal has activated the missing call notification service, and thus, once the called terminal is no longer in the above states, the communication system sends the information of this call to the called terminal in the form of a missing call notification short message.

The prior missing call notification technique is a solution of directly delivering a missing call notification short message. In this solution, the service platform for missing call notification is communicated with a public switch telecommunication network, PSTN, public land mobile network, PLMN, of the operators, obtains missing call information of the called terminal through a call signaling, and directly delivers the missing call information to the called terminal in the missing call notification short message through a protocol interface with a short message gateway, SMG, a short message service center, SMSC.

According to this solution, a service platform for missing call notification is required to have the capabilities of obtaining missing calls and intercommunicating with the SMG/SMSC. The service platform for missing call notification neither stores all the calls missing when the called terminal is in the power-off and unreachable status, nor manages the status information of the called terminal.

Therefore, the aforementioned solution has the following disadvantages. Firstly, once the called terminal is powered on or becomes reachable, the called terminal continuously receives a large amount of missing call notification short messages, which not only causes congestion of a communication link, but also makes the called terminal not be able to process other operations at the moment. Secondly, because the missing call notification short messages are delivered for all the missing calls, for example, if the same calling terminal has called the called terminal for N times, N missing call notification short messages will be sent to the called terminal. Therefore, the capacity of the SMSC for storing the missing call notification short messages faces a great challenge. If there are too many missing calls, it is necessary to expand the capacities of all SMSCs, thereby bringing difficulties in constructing and upgrading the network.

### SUMMARY

Accordingly, the present invention is directed to a method for missing call notification, a system for missing call notification, and a service platform for missing call notification, thereby reducing the number of missing call notification short messages in a communication network.

In one aspect, an embodiment of the present invention provides a method for a missing call notification in an embodiment, and the method includes the following steps.

Once a called terminal misses a call, it is determined whether a missing call notification short message of the called terminal in a called SMSC is allowed to be replaced or not.

If the missing call notification short message can be replaced, the missing call information is combined with the content of the missing call notification short message, so as to replace the missing call notification short message.

The called SMSC sends the missing call notification short message to the called terminal after a triggering condition is satisfied.

In another aspect, an embodiment of the present invention further provides a system for a missing call notification, and the system includes a calling terminal, a called terminal, a service platform for missing call notification, and a called SMSC.

The service platform for missing call notification is adapted to determine whether a missing call notification short message of a called terminal in the called SMSC is allowed to be replaced or not after the called terminal misses a call, and combine the missing call information with the content of the missing call notification short message to replace the missing call notification short message if the replacement is allowed.

The called SMSC is adapted to send the missing call notification short message to the called terminal after a triggering condition is satisfied.

An embodiment of the present invention further provides a service platform for a missing call notification, and the service platform for missing call notification includes a trigger unit, a replacement determination unit, and a replacement unit.

The trigger unit is adapted to notify the replacement determination unit once the called terminal misses a call.

The replacement determination unit is adapted to determine whether the missing call notification short message of the called terminal in the called SMSC is allowed to be replaced or not, and notify the replacement unit if the replacement is allowed.

The replacement unit is adapted to combine the missing call information with the content of the missing call notification short message, so as to replace the missing call notification short message.

According to the aforementioned technical solution in the embodiment of the present invention, after determining that the missing call notification short message of the called terminal in the called SMSC can be replaced, the missing call information is combined with the missing call notification short message, e.g., combining a plurality of missing calls into one missing call notification short message, and the information of the plurality of missing calls is sent to the called terminal in one missing call notification short message, thereby reducing the number of missing call notification short messages for the called terminal, avoiding the congestion of a communication link, and further reducing the number of messages sent to the called terminal once the called terminal is powered on, thereby reducing the number of short messages to be stored and processed in the SMSC and lowering the load and operation cost of the SMSC.

Moreover, the missing call notification short message in the called SMSC can be accurately replaced in an embodiment of the present invention, the success ratio for delivering the replaced missing call notification short messages was ensured, and exception handling of the SMSC caused when the missing call notification short message has already been delivered or caused by other reasons was avoided.

### BRIEF DESCRIPTION OF THE DRAWING(S)

The present invention will become more fully understood from the detailed description given herein below for illustration, which thus is not limitative:

FIG. 1A and 1B are schematic views of a signaling flow of a method for missing call notification according to a first embodiment of the present invention;

FIG. 2 is a schematic structural view of a system for missing call notification according to the first embodiment of the present invention;

FIG. 3 is a schematic structural view of a service platform for missing call notification according to the first embodiment of the present invention;

FIG. 4 is a general schematic view of a technical solution according to a second embodiment of the present invention;

FIG. 5 is a schematic view of a signaling flow of a method for missing call notification according to the second embodiment of the present invention;

FIG. 6 is a schematic structural view of a system for missing call notification according to the second embodiment of the present invention; and

FIG. 7 is a schematic structural view of a service platform for missing call notification according to the second embodiment of the present invention.

### DETAILED DESCRIPTION

In order to make the objectives, technical solutions, and advantages of the present invention more comprehensible, the present invention is described below through the following embodiments.

In a first embodiment of the present invention, a prior art network architecture is adopted for demonstration.

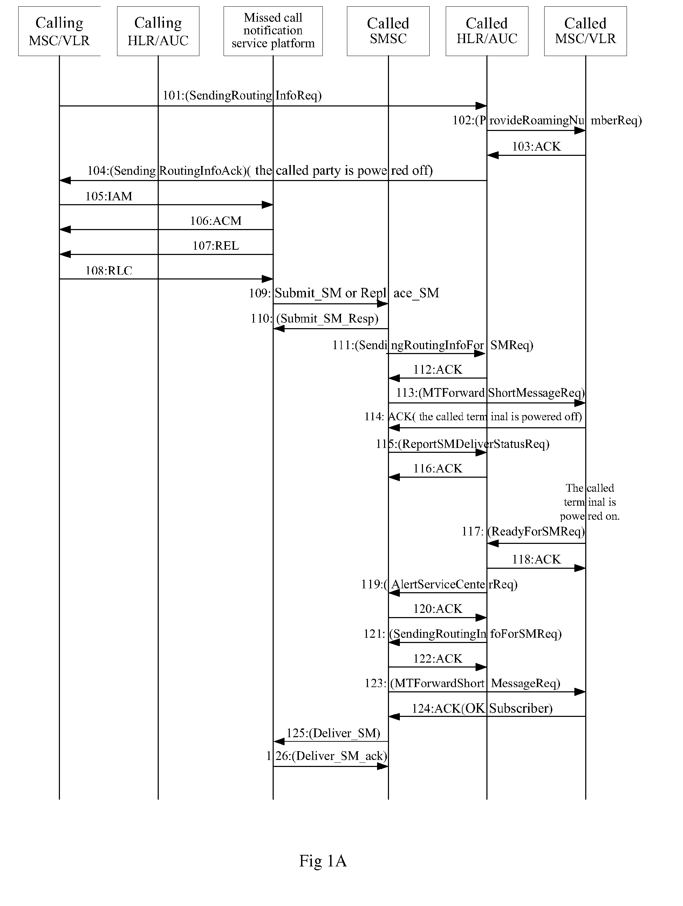

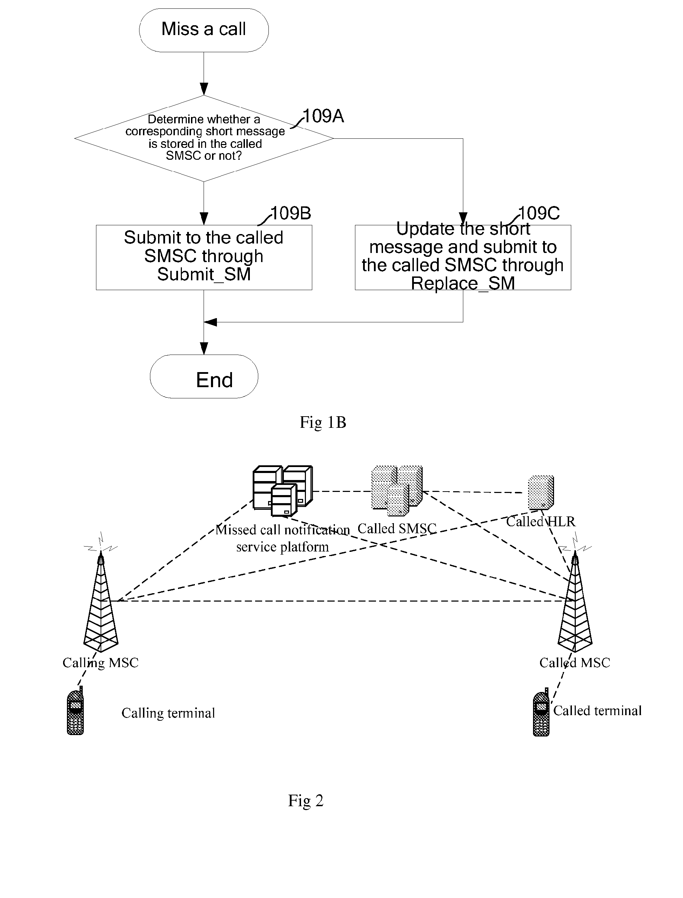

FIG. 1 is a schematic view of a signaling flow of a method for missing call notification according to the first embodiment of the present invention. Herein, the terminal of a calling party is called a calling terminal, the terminal of a called party is called a called terminal, a mobile service switching center/visitor location register, MSC/VLR, corresponding to the calling terminal is called a calling MSC/VLR, a home location register/authentication center, HLR/AUC, corresponding to the calling terminal is called a calling HLR/AUC, an MSC/VLR corresponding to the called terminal is called a called MSC/VLR, and an HLR/AUC corresponding to the called terminal is called a called HLR/AUC.

Referring to FIG. 1, the method for missing call notification in the first embodiment of the present invention includes the following steps.

Step 101: The calling party sends a call request to the called terminal through the calling terminal, and the calling MSC/VLR sends a routing request message, e.g. SendingRoutingInfoReq message, to the called HLR/AUC after receiving the call request.

Steps 102-103: The called HLR/AUC sends a roaming request message, e.g. ProvideRoamingNumberReq message, to the called MSC/VLR, and the called MSC/VLR returns an acknowledgement message, e.g. ACK.

Step 104: Because the called terminal is powered off and in an unreachable status, the called HLR/AUC returns a routing request message, e.g. SendingRoutingInfoAck, to the calling MSC/VLR, and the routing request message, e.g. SendingRoutingInfoAck, carries the information of Absent_Subscriber, so that the calling MSC/VLR obtains that the called terminal is unreachable from the SendingRoutingInfoAck message.

Step 105: The calling MSC/VLR obtains that the called terminal is powered off and becomes unreachable, and sends an initial address message ,IAM, to the service platform for missing call notification, so as to forward the call to the service platform for missing call notification.

Step 106: The missing call notification service platform obtains the mobile station international ISDN numbers, MSISDN, of the calling terminal and the MSISDN of the called terminal from the IAM. The service platform for missing call notification performs authentication according to the attributes of the called terminal, for example, determines whether the called terminal has subscribed the missing call notification service, and provides the missing call notification service after the called terminal passes the authentication, and returns an address complete message ,ACM, to the calling MSC/VLR.

In Steps 107-108: The service platform for missing call notification sends a release, REL, request to the calling MSC/VLR, and the calling MSC/VLR releases the calling terminal and returns a release complete, RLC, response to the service platform for missing call notification.

Steps 101-108 constitute a calling flow. The following Steps 109-126 constitute a missing call notification flow.

Steps 109-110: The service platform for missing call notification determines to send a Submit_SM or a Replace_SM to the called SMSC through determining whether the called SMSC stores a missing call notification short message corresponding to the calling terminal of the missing call or whether the service platform for missing call notification has submitted a missing call notification short message corresponding to the calling terminal of the missing call to the called SMSC. If the called SMSC stores the missing call notification short message corresponding to the calling terminal of the missing call or the service platform for missing call notification has submitted the missing call notification short message corresponding to the calling terminal of the missing call to the called SMSC, a new missing call notification short message is generated according to the original missing call notification short message and the current missing call information, and sent to the called SMSC through the Replace_SM, so as to replace the original missing call notification short message. The called SMSC replaces the original missing call notification short message with the new missing call notification short message. If the called SMSC does not store the missing call notification short message corresponding to the calling terminal of the missing call or the service platform for missing call notification has not submitted the missing call notification short message corresponding to the calling terminal of the missing call to the called SMSC, a new missing call notification short message is generated according to the current missing call information, such as "88888888 has called you once at 10:23", and is submitted to the called SMSC through the Submit_SM. The called SMSC stores the received missing call notification short message. Herein, the Submit_SM and the Replace_SM are both messages defined by the short message peer to peer protocol, SMPP. However, the present invention is not limited to the two messages, and other messages may also be used to achieve the aforementioned objective.

If the service platform for missing call notification sends the Submit_SM, the called SMSC stores the received missing call notification short message, and returns a Submit_SM_Resp to the service platform for missing call notification, and sends the relevant information of the missing call notification short message to the service platform for missing call notification, for example, a short message identifier, information of the calling terminal, and relevant contents of the short message. Herein, a short message number is taken as the short message identifier.

As shown in FIG. 1B, Steps 109-110 are described below in detail.

Step 109A: The service platform for missing call notification searches the information about the calling terminal of the current missing call from the locally stored relevant information of the missing call notification short messages. If the information about the calling terminal of the missing call is obtained, it indicates that the missing call notification short message corresponding to the calling terminal of the missing call has ever been submitted to the called SMSC and the called SMSC stores the missing call notification short message corresponding to the calling terminal of the missing call, Step 109C is performed. If the information about the calling terminal of the missing call is not found, it indicates that the missing call notification short message corresponding to the calling terminal of the missing call has not been submitted to the called SMSC and the called SMSC does not store the missing call notification short message corresponding to the calling terminal of the missing call, Step 109B is performed.

Step 109B: A new missing call notification short message is generated according to the current missing call information, and sent to the called SMSC through the Submit_SM. The called SMSC stores the received missing call notification short message, and returns a short message number and other information to the service platform for missing call notification in Step 110.

Step 109C: The submitted missing call notification short message and the serial number of the missing call notification short message are obtained, and a new missing call notification short message is generated according to the submitted original missing call notification short message and the current missing call information, and sent to the called SMSC through the Replace_SM. The called SMSC replaces the original missing call notification short message with the new missing call notification short message according to the short message number.

Step 109 is further illustrated below by taking the missing call that 88888888 calls the called terminal at 11:34 as an example. The service platform for missing call notification searches the calling number 88888888 from the locally stored relevant information of the missing call notification short messages. If the information has been submitted by the calling terminal, the locally stored relevant information of the missing call notification short messages contains the calling number, for example, "88888888 has called you once at 10:23", and the short message serial number 0001 is obtained as well. The service platform for missing call notification generates a new missing call notification short message according to the original missing call notification short message and the current missing call information, for example, "88888888 has called you twice between 10:23 and 11:34", and the short message serial number and the new missing call notification short message are sent to the called SMSC through the Replace_SM. The called SMSC replaces the original missing call notification short message serial numbered with 00001 by the new missing call notification short message.

If the information has not been submitted before, the calling number 88888888 cannot be found in the locally stored relevant information of the missing call notification short messages. The service platform for missing call notification generates a new missing call notification short message according to the missing call information, such as "88888888 has called you once at 11:34", and submits the new missing call notification short message to the called SMSC through the Submit_SM. The called SMSC stores the received missing call notification short message, and obtains a serial number 00001 of the missing call notification short message, and returns the short message serial number 00001 and other relevant information to the service platform for missing call notification.

The flow of the first embodiment of the present invention is described below by reference to FIG. 1A.

Steps 111-112: The called SMSC sends a routing message request short message, e.g. SendingRoutingInfoForSMReq, to the called HLR/AUC, the called HLR/AUC returns an ACK to the called SMSC, and the ACK carries the routing information of the called MSC/VLR.

Steps 113-114: According to the routing information of the called MSC/VLR, the called SMSC delivers a short message request message, e.g. MTForwardShortMessageReq, to the called MSC/VLR and requests the called MSC/VLR to send the missing call notification short message to the called terminal. Because the called terminal is powered off, the missing call notification short message fails to be sent, and the called MSC/VLR returns an ACK indicating that the short message fails to be sent, and the ACK carries the information Absent_Subscriber of the called terminal.

Steps 115-116: After receiving the ACK, the called SMSC sends a register state report message, e.g. ReportSMDeliverStatusReq, to the called HLR/AUC, notifies the called HLR/AUC to perform corresponding operations, sets a mobile station not reachable, MNRF, mark for the called terminal, and adds the address of the called SMSC into the queue of message waiting data, MWD, so as to notify the called SMSC on time once the called HLR/AUC obtains that the called terminal is powered on and becomes reachable.

Steps 117-118: Once powering on the called terminal, the called party requests to register on the called MSC/VLR. The called MSC/VLR notifies the called HLR/AUC that the called terminal is powered on and becomes reachable through a short message ready received message, e.g. ReadyForSMReq. The called HLR/AUC returns an ACK to the called MSC/VLR.

Steps 119-120: The called HLR/AUC notifies the called SMSC that the called terminal is powered on through a service notification message, e.g. AlertServiceCenterReq, thereby sending the missing call notification short message to the called terminal. After receiving the notification, the called SMSC returns an ACK to the called HLR/AUC.

Steps 121-122: Upon knowing that the called terminal is powered on, the called SMSC sends SendingRoutingInfoReq to the called HLR/AUC. The called HLR/AUC returns an ACK to the called SMSC.

Steps 123-124: After receiving the response message from the called HLR/AUC, the called SMSC sends MTForwardShortMessageReq to the called MSC/VLR, and sends the missing call notification short message that fails to be sent last time to the called terminal once again. If there are multiple records of missing calls before the called terminal is powered on, the sent missing call notification short message that is the latest missing call notification short message after replacement. Because the called terminal is powered on and becomes reachable, the called MSC/VLR sends the missing call notification short message to the called terminal, and returns an ACK to the called SMSC, and the ACK carries the information, e.g. OK Subscriber.

Steps 125-126: The called SMSC sends a short message state report message, e.g. Deliver_SM for indicating that the missing call notification short message has been sent successfully, to the service platform for missing call notification, and the service platform for missing call notification returns an information of successfully delivered, e.g. Deliver_SM_ack.

Furthermore, the above embodiment may be realized through combining with a prior detection solution, for example, setting a threshold value for the number of missing call notification short messages sent to the called terminal. If another subsequent call is missing when the number of missing call notification short messages stored in the called SMSC has reached the threshold value, and it is determined in Step 109 that the called SMSC has stored the corresponding missing call notification short message, the corresponding missing call notification short message is replaced. If it is determined in Step 109 that the called SMSC does not store the corresponding missing call notification short message, the newly generated missing call notification short message is buffered in the service platform for missing call notification. Furthermore, a return status report is set when the missing call notification short message is submitted to the called SMSC. When receiving any states report response message from the called terminal indicating that a short message is sent successfully, the service platform for missing call notification submits the buffered missing call to the called SMSC through the Submit_SM. The called SMSC sends the buffered missing call to the called terminal, thereby appropriately alleviating the load of the called SMSC, and meanwhile avoiding exception handling caused by loss of states reports to a certain extent.

Additionally, in Step 109, if it is determined that the called SMSC does not store the corresponding missing call notification short message, it is further determined whether the number of missing call notification short messages stored in the called SMSC reaches the threshold value or not. If the number of missing call notification short messages stored in the called SMSC reaches the threshold value, the newly generated missing call notification short message is buffered in the service platform for missing call notification; and if the number of missing call notification short messages stored in the called SMSC does not reach the threshold value, the corresponding missing call notification short message in the called SMSC is replaced.

In order to achieve the above method, in the system for missing call notification in the embodiment of the present invention, except the service platform for missing call notification and the called SMSC that are different from the prior art, the calling terminal, the called terminal, and other network equipments may adopt those equipments in the prior art.3. If the total path costs to the root bridge calculated by the receiving bridge at each port are equal, the designated Bridge IDs are different, and the MAX_MACs are the same, the root port corresponding to the root bridge is selected in the following manner.

It should be noted that, although the mobile communication network is taken as an example for illustration in the above descriptions, the embodiment of the present invention is also suitable to a fixed network. That is, the calling terminal may be a communication terminal in a mobile communication network or a communication terminal in a fixed network, and the called terminal may be a communication terminal in the mobile communication network or a communication terminal in a fixed network, as long as the called terminal is able to receive short messages.

As shown in FIG. 2, the system for missing call notification in the first embodiment of the present invention further includes a service platform for missing call notification and a called SMSC, besides a calling terminal, a called terminal, and a communication network as that in the prior art.

Once the called terminal misses a call in a communication network, the service platform for missing call notification is mainly adapted to determine whether the missing call notification short message of the called terminal in the called SMSC may be replaced or not through determining whether the called SMSC stores the missing call notification short message corresponding to the calling terminal of the missing call or not. If the called SMSC stores the missing call notification short message corresponding to the calling terminal of the missing call, the missing call notification short message is replaced by the stored missing call notification, otherwise a new missing call notification short message is generated and the new generated message is submitted to the called SMSC. The SMSC is mainly adapted to store the missing call notification short messages submitted by the service platform for missing call notification, and send the stored missing call notification short messages to the called terminal after a triggering condition is satisfied, such as the called terminal is powered on.

When the missing call occurs for the first time, the called SMSC further sends the missing call notification short message to the called terminal over the communication network, and sets in the communication network that the called SMSC is notified once the called terminal is powered on, after receiving the message returned by the communication network for indicating that the short message fails to be sent. Upon receiving the notification from the communication network for indicating that the called terminal is powered on, the called SMSC sends the missing call notification short message that fails to be sent last time and other stored missing call notification short messages to the called terminal.

As for the circumstance combined with a detection short message, the service platform for missing call notification is further adapted to generate and buffer a new missing call notification short message in the service platform for missing call notification after it is determined that the called SMSC does not store the missing call notification short message corresponding to the calling terminal of the missing call and the number of missing call notification short messages stored in the called SMSC reaches the default threshold value, and further adapted to generate and submit a new missing call notification short message to the called SMSC if it is determined that the called SMSC does not store the missing call notification short message corresponding to the calling terminal of the missing call and the number of missing call notification short messages stored in the called SMSC has not reached the default threshold value yet. Under such circumstance, the service platform for missing call notification is further adapted to submit the buffered missing call notification short message to the called SMSC after the called terminal is powered on, and the called SMSC sends the buffered missing call notification short message to the called terminal. Particularly, the service platform for missing call notification sets that a status report needs to be returned for each missing call notification short message that has been submitted to the called SMSC. After receiving any status report indicating that the short message is sent successfully, the service platform for missing call notification submits the buffered missing call notification short message to the called SMSC, and the called SMSC sends the short messages to the called terminal.

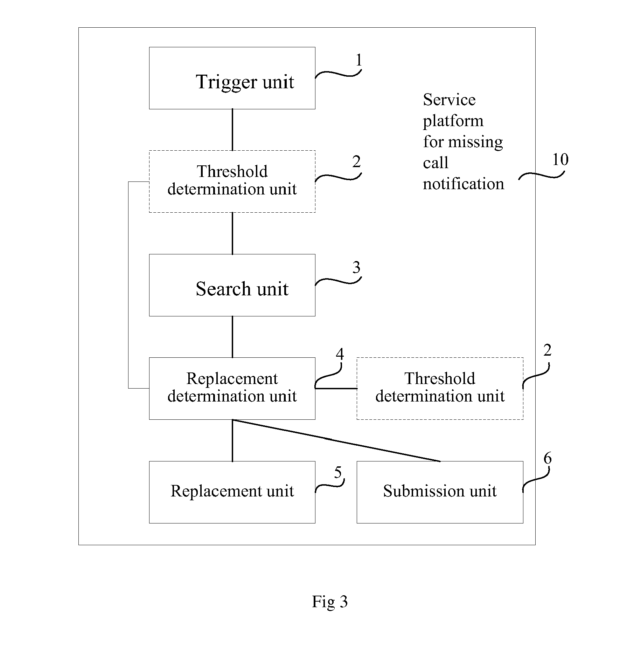

FIG. 3 is a schematic structural view of a service platform for missing call notification according to the first embodiment of the present invention.

As shown in FIG. 3, the service platform for missing call notification in the first embodiment of the present invention includes a trigger unit, a replacement determination unit, and a replacement unit. The trigger unit is adapted to notify the replacement determination unit to make a determination once the called terminal in a communication network misses a call. The replacement determination unit is adapted to determine whether the missing call notification short message of the called terminal in the called SMSC is allowed to be replaced or not, and notify the replacement unit if the replacement is allowed. The replacement unit is adapted to combine the current missing call information with the content of the missing call notification short message according to the notification from the replacement determination unit, so as to replace the missing call notification short message.

The service platform for missing call notification in the first embodiment of the present invention further includes a submission unit. If the replacement determination unit determines that the missing call notification short message is not allowed to be replaced, the submission unit combines the current missing call information with the content of the missing call notification short message and takes the combined message as a new missing call notification short message for being submitted to the called SMSC, or submits a new missing call notification short message merely containing the missing call information to the called SMSC.

The service platform for missing call notification in the first embodiment of the present invention further includes a search unit. The search unit is adapted to search the information of the calling terminal corresponding to the current missing call from the relevant information of the missing call notification short messages stored in the service platform for missing call notification, and provide the search result to the replacement determination unit. Correspondingly, according to the search result, the replacement determination unit determines whether the missing call notification short message is allowed to be replaced or not, that is, if the information of the calling terminal corresponding to the missing call is obtained, the missing call notification short message of the called terminal in the called SMSC is determined to be allowed to be replaced, and if the information of the calling terminal corresponding to the missing call is not obtained, the missing call notification short message of the called terminal in the called SMSC is determined to be not allowed to be replaced.

In addition, the service platform for missing call notification in the first embodiment of the present invention further includes a threshold determination unit. The threshold determination unit may be communicated with the trigger unit, the search unit, and the replacement determination unit, and may also be communicated with the replacement determination unit. Under the first circumstance, the threshold determination unit is adapted to determine whether the number of missing call notification short messages stored in the called SMSC reaches the default threshold value or not according to the notification from the trigger unit, if the number of the missing call notification short messages stored in the called SMSC reaches the default threshold value, a new missing call notification short message is generated and buffered in the missing call notification service platform after the replacement determination unit determines that the missing call notification short message of the called terminal in the called SMSC is not allowed to be replaced; and if the number of the missing call notification short messages stored in the called SMSC does not reach the default threshold value, a new short message is generated and submitted to the called SMSC after the replacement determination unit determines that the missing call notification short message of the called terminal in the called SMSC is not allowed to be replaced. Under the second circumstance, the threshold determination unit is adapted to determine whether the number of missing call notification short messages stored in the called SMSC reaches the default threshold value or not after the replacement determination unit has determined that the missing call notification short message is not allowed to be replaced, and if the number of the missing call notification short messages stored in the called SMSC reaches the default threshold value, a new missing call notification short message is generated and buffered in the service platform for missing call notification, and if the number of the missing call notification short messages stored in the called SMSC does not reach the default threshold value, a new missing call notification short message is generated and submitted to the called SMSC.

According to the implementation of the first embodiment of the present invention, the missing call occurring for many times may be combined into one missing call notification short message, and sent multiple missing call information to the called terminal as one missing call notification short message, thereby reducing the number of short messages to be stored and processed in the called SMSC, and alleviating the load and operation cost of the called SMSC. Furthermore, the number of missing call notification short messages sent to the called terminal is also reduced, thereby enhancing the customers' satisfaction.

In the technical solution of the first embodiment, it is determined whether to deliver REPLACE_SM to replace the missing call notification short message or not according to a determination whether the service platform for missing call notification has ever submitted the missing call notification short message corresponding to the called terminal, instead of the actual status of the missing call notification short message in the SMSC. However, the two status may be inconsistent. Therefore, the present invention further provides a second embodiment.

In the second embodiment, if the subscriber sets to forward the calls to the service platform for missing call notification in case of being busy, no answers, or being unreachable, or to forward the calls unconditionally, when the status of the called terminal is consistent with the status set for forwarding, the called HLR or MSC forwards a call to the service platform for missing call notification. The service platform for missing call notification sends the missing call notification short message to the called SMSC according to the SMPP protocol, and the called SMSC delivers the missing call notification short message to the called terminal according to No. 7 signaling.

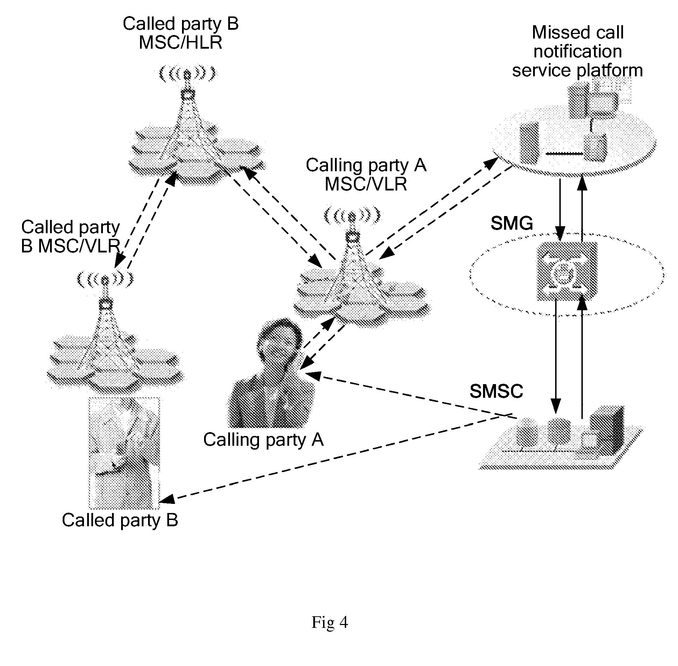

FIG. 4 is a general schematic view of a technical solution according to a second embodiment of the present invention.

Referring to FIG. 4, this solution involves a calling party A, a called party B, MSC/VLR of the calling party A, MSC/HLR of the called party B, MSC/VLR of the called party B, home SMSC of the called party B, SMG, and a service platform for missing call notification.

As shown in FIG. 4, the main service flow of the second embodiment of the present invention is described as follows. The calling party A calls the called party B, B is powered off or is out of service, and the called MSC triggers the call to the service platform for missing call notification according to the forwarding condition set by the called party. The service platform for missing call notification records the current information of the missing call, for example, the information about the calling party A, calling time, and a cause value of forwarding. The service platform for missing call notification delivers a missing call notification short message according to the condition of the missing call of the called party B. If the delivered missing call notification short message needs to be combined with the previous missing call notification short message, a query message is delivered, and it is determined whether to deliver the missing call notification short message for replacement or submit a new missing call notification short message according to the status information of the missing call notification short message returned by the SMSC. If the conditions for combining the missing call notification short message are not satisfied, the service platform for missing call notification directly delivers a new missing call notification short message.

The conditions for combining the missing call notification short message may include that the generated missing call is not the first called missing to be delivered to the called party, a total length of the content of the missing call notification short message does not reach an upper limit, or the number of the combined calling terminals does not reach an upper limit, or the information of the missing call from the same calling terminal has already existed and so on. The specific conditions may be determined according to the configuration of the service solution, and the embodiment of the present invention is not limited thereby.

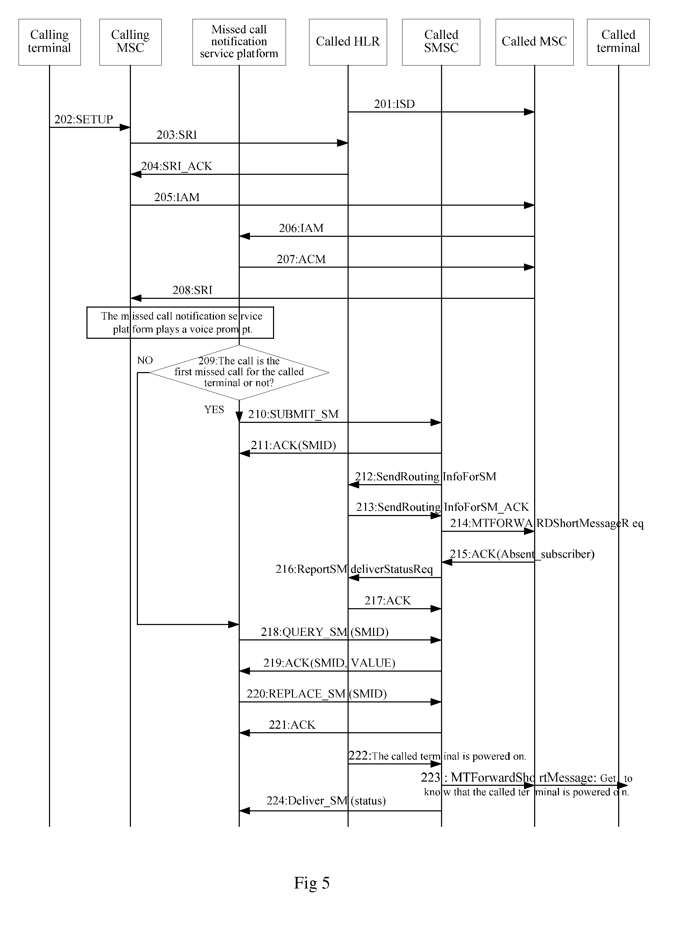

A detailed signaling flow of the second embodiment of the present invention is described by reference to FIG. 5.

In practical application, the call forwarding may be divided into early forwarding and late forwarding according to different positions where the call forwarding occurs. The early forwarding is to obtain the forwarded number at the called HLR, and takes place at the calling MSC, and the early forwarding includes unconditional forwarding and unreachable forwarding, where the called terminal is determined to be unreachable at the called HLR, for example, the called terminal has no dynamic information, or the called terminal is purged and so on. The late forwarding refers that the forwarded number is obtained at the called MSC, and takes place at the called MSC, and the late forwarding includes busy forwarding, no answer forwarding, and unreachable forwarding, where the called terminal is determined to be unreachable at the called MSC, for example, the called MSC sends a call, but receives no response.

The above two kinds of call forwarding circumstances have no influences on the key flow in the embodiment of the present invention. In the following descriptions, only the signaling flow of the early forwarding is described in detail, and the signaling flows of the other circumstances may be obtained by reference to the flow.

Step 201: When location updated, the HLR of the called terminal sends an International Subscriber Dialing, ISD, message to the home MSC of the called terminal, and inserts the forwarding information of being busy, unreachable, or no answers set by the called terminal or set by default into the called home MSC.

Step 202: The calling terminal calls the called terminal, and sends a SETUP message to the calling MSC.

Step 203: The calling MSC sends a routing information, e.g. SendRoutingInfo, SRI, message, to the called HLR, and queries the status information of the called terminal in the called HLR.

Step 204: The called HLR sends the roaming number of the called terminal back to the calling MSC through a response message, e.g. SRI_ACK message.

Step 205: The calling MSC sends an IAM to the home MSC of the called terminal according to the roaming number returned by the HLR and continues the call to the home MSC of the called terminal.

Step 206: When the called terminal is busy, makes no answers, or is unreachable, the home MSC of the called terminal forwards the call to the missing call notification access number of the missing call notification service platform according to the stored forwarding information of the called terminal, and sends an IAM to the service platform for missing call notification.

Step 207: The service platform for missing call notification is ready to play a voice prompt to the calling terminal, so as to notify the calling terminal that the called terminal has subscribed the missing call notification service and the call information will be sent to the called terminal. Therefore, the ACM is firstly sent to the home MSC of the called terminal.

Step 208: The called MSC sends an SRI message to the calling MSC and communicates the calling MSC with the service platform for missing call notification, so that the calling terminal can receive the voice prompt. At this time, the service platform for missing call notification plays the voice prompt to the calling terminal through the calling MSC.

The aforementioned steps belong to the calling flow, and the following steps belong to the missing call notification flow.

Step 209: The service platform for missing call notification determines whether the call is the first missing call for the called terminal or not, if the call is the first missing call for the called terminal, Steps 210-217 and the subsequent Steps 222 to 224 are performed; if the call is not the first missing call for the called terminal, Steps 218-211 and the subsequent Steps 222-224 are performed.

In this step, it is determined whether to combine the missing call notification short messages or not, for example, through determining whether the call is the first missing call of the called terminal. In the second embodiment of the present invention, one or a combination of more than one determination conditions that are mentioned before may be adopted for determining whether to combine the missing call notification short messages or not.

Step 210: The service platform for missing call notification generates a SUBMIT_SM message according to the current missing call information, and sends the SUBMIT_SM message to a home SMSC, the called SMSC, of the called terminal, thereby submitting a new missing call notification short message containing the missing call information.

Step 211: The called SMSC returns an ACK carrying an SMID of the submitted missing call notification short message.

Step 212: The called SMSC sends a short message routing information request, e.g. SendRoutingInfoForSM, to the called HLR, so as to obtain the routing information of the short message.

Step 213: The called HLR returns a response message, e.g. SendRoutingInfoForSM_ack, to the called SMSC in response to the short message routing information request, and sends back the routing information of the short message.

During the period that the called terminal is powered off or becomes unreachable, the called SMSC sends the SendRoutingInfoForSM to the called HLR for many times according to a plurality of missing calls. Once the called HLR finds that the called terminal is powered on or becomes reachable, the called HLR sends back the routing information of the short message to the called SMSC, e.g., sends the SendRoutingInfoForSM_ack message.

Step 214: After receiving the routing information of the short message, the called SMSC sends MTFORWARDShortMessageReq to the visited MSC of the called party, so as to deliver the missing call notification short message.

Step 215: Because the missing call notification short message cannot reach the called terminal, the visited MSC of the called party returns an ACK to the called SMSC, and the ACK carries the information of Absent_subscriber.

Step 216: The called SMSC sets the called HLR through the ReportSMDeliverStatusReq, so as to obtain the reachable status of the called terminal.

Step 217: The called HLR returns an ACK, which indicates that the setting is successful.

Step 218: If the current missing call is not the first call missing to the called terminal, the service platform for missing call notification sends a querying short-message message, e.g. QUERY_SM, at least carrying the SMID to the called SMSC, and queries the status of the missing call notification short message corresponding to the SMID. Taking the SMPP V3.4 protocol as an example, the COMMAND_ID and SMID need to be carried in the QUERY_SM message, and those technicians in the art should appreciate that, the embodiments of the present invention are not limited to the specific forms described herein.

Step 219: The called SMSC returns the status information of the message, e.g. Message_status, to be queried through the ACK according to the SMID to be queried. In the second embodiment of the present invention, the Message_status is indicated by a status value, e.g. VALUE.

Step 220: The service platform for missing call notification performs operations according to the information of Message_state.

Table 1 lists a part of typical status and status values of missing call notification short messages, and processing strategies and delivered messages corresponding to the called SMSC. It should be noted that, Table 1 merely lists some typical circumstances, but does not cover all the realization solutions.

**Table 1**

| Status/status value of missing call notification short message returned by the called SMSC | Processing strategy of service platform for missing call notification | Messages delivered by service platform for missing call notification |
|---|---|---|
| 0 | Wait for the called terminal to be powered on, combine a new missing call with the content of the previous missing call notification short message, and deliver a replacement message at once | Replace_SM(SMID) |
| In processing (ENROUTE)/1 | When delivering the missing call notification short message, combine the new missing call with the content of the previous missing call notification short message, and deliver a replacement message at once | Replace_SM(SMID) |
| Delivered (DELIVERED)/2 | Submit a new missing call notification short message to the SMSC, and the new missing call notification short message does not include the previous missing call information | Submit_SM |
| Expired (EXPIRED)/3 | The missing call notification short message has been expired, combine a new missing call with the content of the previous missing call notification short message, and deliver a new missing call notification short message at once | Submit_SM |
| Deleted (DELETED)/4 | The missing call notification short message has been deleted, combine a new missing call with the content of the previous missing call notification short message, and deliver a new missing call notification short message at once | Submit_SM |
| Undeliverable (UNDELIVERABLE)/5 | The missing call notification short message is undeliverable, combine the new missing call with the content of the previous missing call notification short message, and deliver a new missing call notification short message at once | Submit_SM |
| Accepted (ACCEPTED)/6 | Submit the new missing call notification short message, which does not include the previous missing call information | Submit_SM |
| Unknown (UNKNOWED)/7 | The missing call notification short message becomes abnormal, combine the new missing call with the content of the previous missing call notification short message, and deliver a new missing call notification short message at once | Submit_SM |
| Rejected (REJECTED)/8 | The missing call notification short message has been rejected, combine the new missing call with the content of the previous missing call notification short message, and deliver a new missing call notification short message at once | Submit_SM |

In Table 1, 0 represents waiting for the called terminal to be powered on, and the missing call notification short message can be replaced. 1 represents that the missing call notification short message is in processing, and can be replaced. 2 represents the missing call notification short message has been delivered, and cannot be replaced. 3 represents that the missing call notification short message has been expired, and cannot be replaced. 4 represents the missing call notification short message has been deleted, and cannot be replaced. 5 represents the missing call notification short message is undeliverable, and cannot be replaced. 6 represents that the missing call notification short message has been received by the called terminal and cannot be replaced. 7 represents the missing call notification short message is unknown, and cannot be replaced. 8 represents that the missing call notification short message has been rejected, and cannot be replaced.

If the missing call notification short message can be replaced, the service platform for missing call notification replaces the content of the previous missing call notification short message with a new missing call notification short message through a REPLACE_SM message. The content of the new missing call notification short messages are shown in Table 1, which may be obtained by combining the current missing call information with the content of the original missing call notification short message, and may also only contain the current missing call information.

An example of combining the missing call notification short message is described below, but the embodiments of the present invention are not limited to this example. It is assumed that the original missing call notification short message stored in the called SMSC is "88888888 has called you once at 10:23". If 88888888 has called the called terminal once again at 11:34 and the called terminal is powered off, the missing call notification service platform combines the information with the original missing call notification short message to generate a new missing call notification short message, for example, "88888888 has called you twice between 10:23 and 11:34" or "88888888 has called you twice at 10:23 and at 11:34" and so on.

In addition, if the missing call notification short message cannot be replaced, the service platform for missing call notification sends SUMMIT_SM, and submits a new missing call notification short message containing the current missing call information. The process is the same as Steps 210-217, which will not be repeated here.

Step 221: The called SMSC returns a message indicating whether the replacement is successful or not through an ACK.

If the replacement is not successful, the missing call notification service platform may further perform exception handling, for example, continuing to try to make replacement. Of course, the service platform for missing call notification may no perform further operations.

Step 222: Once the called terminal is powered on, it registers at the visited MSC of the called party. The called MSC notifies the called HLR that the called terminal is powered on, and the called HLR notifies the called SMSC that the called terminal is powered on.

Step 223: According to the routing information of the message, the called SMSC sends a delivering short-message message, e.g. MTFORWARDShortMessage, to the visited MSC of the called party, and sends the missing call notification short message to the visited MSC of the called party. The visited MSC of the called party sends the missing call notification short message to the called terminal.

Step 224: The called SMSC returns the missing call notification, e.g. Deliver_SM, to the service platform for missing call notification.

In the second embodiment of the present invention, the status of the specified missing call notification short message is queried at a query interface in the SMPP protocol, and the specified missing call notification short message is replaced when the replacement is allowed, thereby ensuring the success ratio of delivering the missing call notification short message for replacement.

The names of the messages listed in the above embodiment of the present invention mainly aim at illustrating the implementation solution more clearly, but do not represent the specific protocol content in the practical application. Therefore, the protection scope of the embodiments of the present invention is not limited herein.

Moreover, the service platform for missing call notification may be directly communicated with the called SMSC, and may also be communicated with the SMSC through the SMG. The signaling flow charts thereof are substantially the same, and the SMG is required when the service platform for missing call notification is interacted with the SMSC.

Besides the 3rd generation partnership project, 3GPP, communication system, the embodiments of the present invention may further be applied in other communication systems, such as global system for mobile communication, GSM, code divided multi-access, CDMA, and wideband code divided multi-access, WCDMA. The types of the communication network are not limited in the embodiments of the present invention, as long as the missing call notification can be realized through missing call notification short messages.

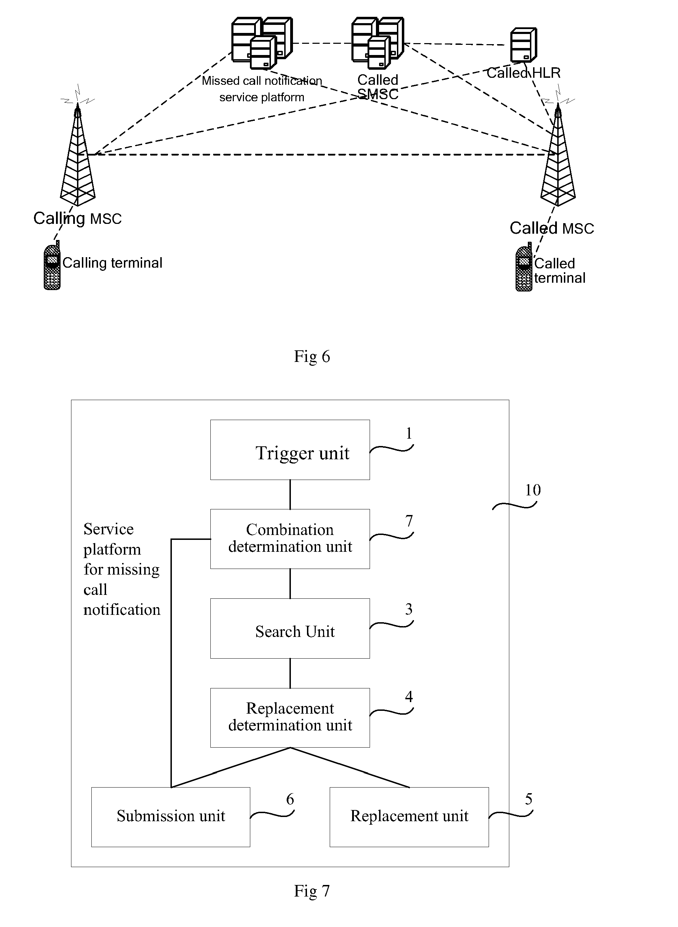

FIG. 6 is a schematic structural view of a system for missing call notification according to the second embodiment of the present invention.

Referring to FIG. 6, the system mainly includes a calling terminal, a calling MSC, a called terminal, a called MSC, a called HLR, a service platform for missing call notification, and a called SMSC. The calling terminal, the calling MSC, the called terminal, the called MSC, and the called HLR may be implemented through those equipments in the prior art, which will not be described in detail here.

The service platform for missing call notification in the second embodiment of the present invention is mainly adapted to query whether the missing call notification short message corresponding to the called terminal in the called SMSC may be replaced or not after obtaining that the called terminal miss a call. If the missing call notification short message may be replaced, the current missing call information is combined with the content of the missing call notification short message to generate a new missing call notification short message for replacing the original missing call notification short message.

The called SMSC is mainly adapted to send the missing call notification short message to the called terminal once a triggering condition is satisfied, for example, the called terminal is powered on or becomes reachable.

Before the query process, the missing call notification service platform is further adapted to determine whether the missing call notification short message needs to be combined or not, if the missing call notification short message needs to be combined, the query step and subsequent steps are performed; if the missing call notification short message needs not to be combined, a new missing call notification short message containing the current missing call information is submitted to the called SMSC.

Moreover, the service platform for missing call notification may further combine the current missing call information with the content of the missing call notification short message in order to obtain a new missing call notification short message when the missing call notification short message cannot be replaced, and submit the new missing call notification short message to the called SMSC, or submit a new missing call notification short message merely containing the current missing call information to the called SMSC.

During the process of querying the status of the missing call notification short message, the service platform for missing call notification queries whether the missing call notification short message in the called SMSC may be replaced or not through sending a query message containing the SMID of the missing call notification short message to the called SMSC. The called SMSC returns the status information of the missing call notification short message for indicating whether the missing call notification short message may be replaced or not.

The system for missing call notification in FIG. 6 further includes an SMG, not shown. As shown in FIG. 6, the SMG is located between the service platform for missing call notification and the called SMSC, and is adapted to forward various messages between the SMSC and the service platform for missing call notification.

The system for missing call notification in the embodiments of the present invention may be applied to the 3GPP communication, GSM, CDMA, WCDMA, or fixed communication system. That is to say, the called terminal, the called SMSC, and the service platform for missing call notification may be located in any communication system, as long as the method for missing call notification in the embodiments of the present invention can be realized.

FIG. 7 is a schematic structural view of a service platform for missing call notification according to the second embodiment of the present invention.

As shown in FIG. 7, the service platform for missing call notification at least includes a trigger unit, a search unit, a replacement determination unit, and a replacement unit, and may further include a combination determination unit and a submission unit.

In the service platform for missing call notification shown in FIG. 7, the trigger unit is adapted to notify the query unit to make a query, after obtaining that the called terminal misses a call. After receiving the query notification, the query unit queries and obtains the information of the missing call notification short message corresponding to the called terminal from the called SMSC, and submits the information to the replacement determination unit. The replacement determination unit determines whether the missing call notification short message may be replaced or not according to the information of the missing call notification short message corresponding to the called terminal in the SMSC submitted by the query unit. If the replacement is allowed, the replacement determination unit notifies the replacement unit to perform the replacement. After receiving the replacement notification, the replacement unit combines the current missing call information with the content of the missing call notification short message, so as to replace the original missing call notification short message.

The service platform for missing call notification further includes the submission unit. The submission unit may combine the current missing call information with the content of the original missing call notification short message to obtain a new missing call notification short message, and submit the new missing call notification short message to the called SMSC, or submit a new missing call notification short message merely containing the current missing call information to the called SMSC.

If the replacement determination unit determines that the missing call notification short message cannot be replaced, the replacement determination unit notifies the submission unit to submit a new missing call notification short message. According to the notification, the submission unit combines the current missing call information with the content of the original missing call notification short message to obtain a new missing call notification short message, and submits the new missing call notification short message to the called SMSC, or submits a new missing call notification short message merely containing the missing call information to the called SMSC.

Furthermore, the missing call notification service platform shown in FIG. 7 further includes the combination determination unit located between the trigger unit and the query unit. The combination determination unit is adapted to determine whether the missing call notification short message needs to be combined or not, and the missing call notification short message needs to be combined, the combination determination unit notifies the query unit to perform query.

Furthermore, if the combination determination unit determines that the missing call notification short message does not need to be combined, the combination determination unit notifies the submission unit to submit a new missing call notification short message. According to the notification, the submission unit submits a new missing call notification short message containing the missing call information to the called SMSC.

According to the implementations in the present invention, besides the advantages of the first embodiment, the second embodiment of the present invention can further replace the missing call notification short message in the called SMSC accurately, thereby ensuring the success ratio of delivering the missing call notification short message for replacement and avoiding the exception handling of the SMSC caused when the missing call notification short message has already been delivered or caused by other reasons.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A method for a missing call notification, comprising:
determining whether a missing call notification short message of a called terminal in a called short message service center, SMSC, is allowed to be replaced or not, after the called terminal misses a call;
combining information of the missing call with a content of the missing call notification short message if the missing call notification short message is allowed to be replaced, so as to replace the missing call notification short message; and
sending, by the called SMSC, the missing call notification short message to the called terminal after a triggering condition is satisfied.

2. The method according to claim 1, further comprising:
combining the missing call information with the content of the missing call notification short message into a new missing call notification short message if the missing call notification short message is not allowed to be replaced; and
submitting the new missing call notification short message to the called SMSC, or submitting a new missing call notification short message merely containing the missing call information to the called SMSC missing.

3. The method according to claim 1, wherein determining whether a missing call notification short message of a called terminal in a called SMSC is allowed to be replaced or not comprises:
searching information of a calling terminal of the missing call from relevant information of missing call notification short messages stored in a missing call notification service platform,
determining the missing call notification short message of the called terminal in the called SMSC is allowed to be replaced, if the information of the calling terminal is obtained, and
determining that the missing call notification short message of the called terminal in the called SMSC is not allowed to be replaced, if the information of the calling terminal is not obtained.

4. The method according to claim 3, further comprising:
storing relevant information of the missing call notification short message submitted to the called SMSC in the missing call notification service platform.

5. The method according to claim 1, wherein determining whether a missing call notification short message of a called terminal in a called SMSC is allowed to be replaced or not comprises:
querying and obtaining information of the missing call notification short message of the called terminal from the called SMSC; and
determining whether the missing call notification short message is allowed to be replaced or not according to the information of the missing call notification short message of the called terminal.

6. The method according to claim 5, wherein querying and obtaining information of the missing call notification short message of the called terminal from the called SMSC comprises:
sending a query message containing an identifier of the missing call notification short message to the called SMSC, and
and returning, by the called SMSC, status information of the missing call notification short message;
wherein the status information indicates whether the missing call notification short message is allowed to be replaced or not.

7. The method according to claim 6, wherein if the status information is: waiting for a subscriber to power on and/or in processing, the missing call notification short message is allowed to be replaced.

8. The method according to claim 6, wherein,
if the status information is: having been sent, and/or having been expired, and/or having been deleted, and/or not allowed to be sent, and/or having been received, and/or unknown, and/or having been rejected, the message is not allowed to be replaced;
if the status information is: having been expired, and/or having been deleted, and/or not allowed to be sent, and/or unknown, and/or having been rejected, the missing call information is combined with the content of the missing call notification short message and submitted the combined message to the called SMSC as a new missing call notification short message; and
if the status information is: having been sent and/or having been received, a new missing call notification short message merely containing the missing call information is submitted to the called SMSC.

9. The method according to claim 1, further comprising:
sending, by the called SMSC, a missing call notification short message to the called terminal through a communication network when the called terminal misses a call for the first time; and
setting, by the called SMSC, in the communication network that the called SMSC, is notified when a triggering condition is satisfied, after receiving a message that the short message is failed to be sent returned by the communication network;
wherein sending, by the called SMSC, the missing call notification short message to the called terminal after a triggering condition is satisfied comprises:
notifying, by the communication network, the called SMSC according to the setting after the triggering condition is satisfied; and
sending, by the called SMSC, the missing call notification short message that is failed to be sent last time and other missing call notification short messages to the called terminal.

10. The method according to claim 1, further comprising:
determining whether the number of the missing call notification short messages stored in the called SMSC reaches a default threshold value or not after determining that the missing call notification short message of the called terminal in the called SMSC is not allowed to be replaced;
generating and buffering a new missing call notification short message in the missing call notification service platform, if the number of the missing call notification short messages stored in the called SMSC reaches the default threshold value;
generating and submitting a new missing call notification short message to the called SMSC, if the number of the missing call notification short messages stored in the called SMSC does not reach the default threshold value;
submitting the missing call notification short message buffered in the missing call notification service platform to the called SMSC after the triggering condition is satisfied, and
sending, by the called SMSC, the missing call notification short message to the called terminal.

11. The method according to claim 1, wherein before determining whether a missing call notification short message of a called terminal in a called SMSC is allowed to be replaced or not, the method further comprises:
determining whether a number of the missing call notification short messages stored in the called SMSC reaches a default threshold value or not;
generating and buffering a new missing call notification short message in the missing call notification service platform after determining that the missing call notification short message of the called terminal in the called SMSC is not allowed to be replaced, if the number of the missing call notification short messages stored in the called SMSC reaches the default threshold value;
generating and submitting a new missing call notification short message to the called SMSC after determining that the missing call notification short message of the called terminal in the called SMSC is not allowed to be replaced, if the number of the missing call notification short messages stored in the called SMSC does not reach the default threshold value;
submitting the missing call notification short message buffered in the missing call notification service platform to the called SMSC after the triggering condition is satisfied, and
sending, by the called SMSC, the missing call notification short message to the called terminal.

12. The method according to claim 10 or 11, further comprising:
setting that a status report needs to be returned for the submitted missing call notification short message; and
submitting the missing call notification short message stored in the missing call notification service platform to the called SMSC, after receiving any status report of successfully sending.

13. The method according to claim 1, further comprising:
determining whether it is necessary to combine the missing call notification short message or not,
determining whether the missing call notification short message of the called terminal in the called SMSC is allowed to be replaced or not and performing subsequent steps, if it is necessary to combine the missing call notification short message; and
submitting a new missing call notification short message containing the missing call information to the called SMSC, if it is not necessary to combine the missing call notification short message.

14. The method according to claim 13, wherein determining whether it is necessary to combine the missing call notification short message or not comprises:
determining whether the missing call is the first missing call of the called terminal; and/or determining whether a total length of the missing call notification short message reaches an upper limit; and/or determining whether a number of the combined calling terminals reaches an upper limit; and/or determining whether the information of another missing call of the same calling terminal exists before.

15. A system for a missing call notification, comprising a calling terminal, a called terminal, a missing call notification service platform, and a called short message service center, SMSC, wherein:
the missing call notification service platform is adapted to determine whether a missing call notification short message of the called terminal in the called SMSC is allowed to be replaced or not after the called terminal misses a call, and combine the missing call information with the content of the missing call notification short message to replace the missing call notification short message if the replacement is allowed; and
the called SMSC is adapted to send the missing call notification short message to the called terminal after a triggering condition is satisfied.

16. The system according to claim 15, further comprising a short message gateway, SMG, communicated between the called SMSC and other equipments, and adapted to forward messages between the called SMSC and the other equipments.

17. The system according to claim 15, wherein the called terminal, the missing call notification service platform, and the called SMSC are in a 3rd generation partner project, 3GPP, communication system, a global system of mobile communication, GSM, a code division multiple access, CDMA, communication system, a wideband code division multiple access, WCDMA, communication system, or a fixed communication system.

18. A service platform for a missing call notification, comprising a trigger unit, a replacement determination unit, and a replacement unit, wherein:
the trigger unit is adapted to notify the replacement determination unit after a called terminal misses a call;
the replacement determination unit is adapted to determine whether a missing call notification short message of the called terminal in a called short message service center, SMSC, is allowed to be replaced or not, and notify the replacement unit if the replacement is allowed; and
the replacement unit is adapted to combine the missing call information with the content of the missing call notification short message, so as to replace the missing call notification short message.

19. The service platform according to claim 18, further comprising: a submission unit, adapted to combine the missing call information with the content of the missing call notification short message to obtain a new missing call notification short message and submit the new missing call notification short message to the called SMSC, or adapted to submit a new missing call notification short message merely containing the missing call information to the called SMSC, after the replacement determination unit determines that the missing call notification short message is not allowed to be replaced.

20. The service platform according to claim 18, further comprising: a search unit, adapted to search information of a calling terminal of the missing call from relevant information of the missing call notification short messages stored in the missing call notification service platform, and submit a search result to the replacement determination unit;
wherein the replacement determination unit determines whether the missing call notification short message is allowed to be replaced or not according to the search result.

21. The service platform according to claim 18, further comprising: a threshold determination unit, adapted to determine whether a number of missing call notification short messages stored in the called SMSC reaches a default threshold value or not if the replacement determination unit determines that the missing call notification short message is not allowed to be replaced; if the number of missing call notification short messages stored in the called SMSC reaches the default threshold value, generate a new missing call notification short message and buffer the new missing call notification short message in the missing call notification service platform, and if the number of missing call notification short messages stored in the called SMSC does not reach the default threshold value, generate a new missing call notification short message and submit the new missing call notification short message to the called SMSC.

22. The service platform according to claim 18, further comprising: a threshold determination unit, adapted to determine whether a number of missing call notification short messages stored in the called SMSC reaches a default threshold value or not according to a notification from the trigger unit, if the number of missing call notification short messages stored in the called SMSC reaches the default threshold value, generate a new missing call notification short message and buffer the new missing call notification short message in the missing call notification service platform after the replacement determination unit determines that the missing call notification short message of the called terminal in the called SMSC is not allowed to be replaced; and if the number of missing call notification short messages stored in the called SMSC does not reach the default threshold value, generate a new missing call notification short message and submit the new short message to the called SMSC after the replacement determination unit determines that the missing call notification short message of the called terminal in the called SMSC is not allowed to be replaced.

23. The service platform according to claim 18, further comprising: a query unit, adapted to query and obtain information of the missing call notification short message of the called terminal from the called SMSC according to a notification from the trigger unit, and submit the information of the missing call notification short message of the called terminal to the replacement determination unit;
wherein the replacement determination unit determines whether the missing call notification short message is allowed to be replaced or not according to the information of the missing call notification short message of the called terminal.

24. The service platform according to claim 18, further comprising: a combination determination unit, adapted to determine whether it is necessary to combine missing call notification short messages or not according to a notification from the trigger unit, and if it is necessary to combine a missing call notification short message, notify the replacement determination unit.

25. The service platform according to claim 24, further comprising: a submission unit, adapted to submit a new missing call notification short message containing the missing call information to the called SMSC if the combination determination unit determines that it is unnecessary to combine the missing call notification short message.
